# EUROPÄISCHE PATENTSCHRIFT

(11) **EP 1 535 792 B1**
(45) Veröffentlichungstag und Bekanntmachung des Hinweises auf die Patenterteilung: **04.03.2009**
(21) Anmeldenummer: 04106049.2
(22) Anmeldetag: 24.11.2004
(51) Int. Cl.: B60N 2/30, B60N 2/36

(54) **Kraftfahrzeugsitz**
Motor vehicle seat
Siège de véhicule automobile

(30) Priorität: 26.11.2003 DE 10355765
(43) Veröffentlichungstag der Anmeldung: 01.06.2005
(73) Patentinhaber: Brose Fahrzeugteile GmbH & Co. KG, 96450 Coburg (DE)
(72) Erfinder: Hofmann, Jochen, 96257 Marktgraitz (DE); Göbel, Olaf, 96450 Coburg (DE)
(74) Vertreter: 2K Patentanwälte Kewitz & Kollegen

(56) Entgegenhaltungen:
- WO-A-20/04091963
- DE-A1- 10 024 537
- DE-A1- 19 616 070
- US-A- 5 482 349
- US-B1- 6 375 255

## Beschreibung

Die vorliegende Erfindung betrifft einen Kraftfahrzeugsitz, insbesondere einen Kraftfahrzeug-Rücksitz für die zweite oder dritte Sitzreihe von Kraftfahrzeugen.

Ein als Rücksitz-Mittelteil ausgebildeter Kraftfahrzeugsitz ist in DE 100 55 205 A1 offenbart. Das Sitzteil ist mittels einer vorderseitigen und einer rückseitigen Schwenkhebeleinrichtung zwischen einer Sitzposition und einer nach vorne verlagerten, abgesenkten Lagerposition schwenkbeweglich gelagert. Die Rückenlehne ist mit dem Sitzteil mittels einer Verbindungshebeleinrichtung derartig verbunden, dass das Sitzteil in der hochgeklappten Rückenlehnenposition der Rückenlehne die erhöhte Sitzposition und in der nach vorne geklappten Position die abgesenkte Lagerposition einnimmt.

Die Verbindungshebeleinrichtung weist ein zweiarmiges Hebelelement, ein Verbindungshebelelement sowie ein Kopplungshebelelement auf. Die Verbindungshebeleinrichtung ist in der Gebrauchslage des Sitzteils arretiert und wird durch Betätigen eines Seilzugs freigegeben. Das Entriegeln erfordert somit ein Bowdenzugsystem, sodass der Aufbau insgesamt vergleichsweise aufwendig ist. Das Bowdenzugsystem erfordert zusätzliche Bauteile, was die Kosten eines Kraftfahrzeugsitzes erhöht.

DE 199 32 214 A1 offenbart einen Fahrzeugsitz, bei dem das Sitzteil beim Umklappen der Rückenlehne von einem Anlenkpunkt der Rückenlehne weg nach vorne bewegbar ist. Die Rückenlehne kann erst nach Betätigen eines Entriegelungsknopfes, der einen Sperrriegel löst, in Richtung des Sitzteiles umgeklappt werden. Dabei wird einerseits die Rückenlehne entriegelt und andererseits ein Bügel freigegeben, sodass sich das Sitzteil nach vorne bewegen kann. Zum Koppeln der Bewegung der Rückenlehne und des Sitzteiles ist ein Mechanismus mit einem Seilzug und einer nicht ständig vorgespannten Feder vorgesehen, was vergleichsweise aufwendig ist. Ohne vorheriges Betätigen des Entriegelungsknopfes kann die Neigung der Rückenlehne nur durch Verdrehen eines Handrades verändert werden.

DE 199 04 009 C1 offenbart einen Kraftfahrzeug-Rücksitz mit klappbarer Rückenlehne und absenkbarem Sitzteil. Das Sitzteil ist an einem Zwischenrahmen schwenkbar gelagert, der seinerseits schwenkbar am Fahrzeugboden gelagert ist. Die Rückenlehne ist mittels eines mechanischen Koppelgliedes mit einem Lenkersystem gekoppelt, das das Sitzteil mit dem Zwischenrahmen schwenkbeweglich koppelt. Der Sitz kann insgesamt erst dann nach vorne verlagert werden, wenn dieser zentral mithilfe eines Handgriffes entriegelt wird. Der Sitz ist vergleichsweise aufwendig und aus einer Vielzahl von Elementen aufgebaut.

DE 195 33 932 A1 offenbart einen Frontsitz für Kraftfahrzeuge, bei dem die Rückenlehne an einem Schlitten schwenkbar angelenkt ist, wobei der Schlitten an einer am Fahrzeugboden festgelegten Schlittenführung und längs verschiebbar gelagert ist. Das Sitzteil wird zunächst nach vorne geschwenkt, anschließend wird die Rückenlehne mit dem Schlitten in Anlage zu dem vorgeschwenkten Sitzteil vorgeschoben. Es ist ein zentraler Verriegelungshaken vorgesehen, der den Sitz durch Betätigen eines Seilzugs entriegelt. Somit sind wiederum zusätzliche Verriegelungselemente erforderlich, sodass der Sitz vergleichsweise aufwendig ausgebildet ist.

DE 196 16 070 A1 offenbart einen Kraftfahrzeugsitz gemäß dem Oberbegriff von Patentanspruch 1, bei dem die Rücklehne stufenlos verstellt werden kann und die Klappbewegung der Rückenlehne über einen Mechanismus mit einer Schwenkbewegung einer Schwinge gekoppelt ist. Zum Vorlagern und Absenken des Sitzteils ist eine Entriegelung erforderlich, die durch einen von hand zu betätigenden Betätigungshebel erfolgt.

US 6,375,255 B1 offenbart einen Kraftfahrzeugsitz, bei dem die Rückenlehne zum Entriegeln des Sitzteils vollständig auf das Sitzteil heruntergeklappt werden muss. Nach dem Entriegeln können dann Rückenlehne und Sitzpolster gemeinsam "Rücken-an-Rücken", d.h. in gegenseitiger Anlage, in eine vorgelagerte Position vorgeschwenkt und abgesenkt werden. Somit wird das entriegelte Sitzteil nicht durch weiteres Vorklappen der Rückenlehne in Richtung zu dem Sitzteil in die vorgelagerte Position abgesenkt.

WO 2004/091963 A1, die Stand der Technik gemäß Art. 54(3) EPÜ für die Staaten DE, ES und FR darstellt, offenbart einen weiteren Kraftfahrzeugsitz, bei dem die Koppelung von Rückenlehne und Sitzpolster durch ein Zugseil bewerkstelligt wird, das mit einer Ausgleichsfeder versehen ist. Erst bei Überschreiten einer durch die Ausgleichsfeder vorgegebenen Zugspannung auf das Zugseil erfolgt die Entriegelung des Sitzteils. Ein Koppelglied, das zumindest einen Koppelhebel umfasst, der jeweils ein Verriegelungselement betätigt, um das Sitzteil zu entriegeln, wenn die Rückenlehne bis zu dem vorbestimmten Neigungswinkel vorgeklappt ist, ist nicht offenbart.

Aufgabe der vorliegenden Erfindung ist es, einen Kraftfahrzeugsitz bereitzustellen der einen einfachen und kostengünstigen Aufbau aufweist und in einfacher Weise bedient werden kann.

Diese Aufgabe wird gelöst durch einen Kraftfahrzeugsitz mit den Merkmalen nach Anspruch 1. Weitere vorteilhafte Ausführungsformen sind Gegenstand der rückbezogenen Unteransprüche.

Gemäß der vorliegenden Erfindung wird ein Kraftfahrzeugsitz bereitgestellt, insbesondere ein Kraftfahrzeug-Rücksitz, mit klappbarer Rückenlehne und absenkbarem Sitzteil, wobei die Rückenlehne in Richtung zu dem Sitzteil klappbar ist und ein Mechanismus vorgesehen ist, sodass das Sitzteil aus einer Gebrauchslage in eine vorgelagerte Position absenkbar ist, wobei ein Koppelglied vorgesehen ist, um das Umklappen der Rückenlehne mit dem Vorlagern und Absenken des Sitzteils zu koppeln, und wobei ein Verriegelungsmechanismus vorgesehen ist, um das Sitzteil in der Gebrauchslage zu verriegeln.

Der Kraftfahrzeugsitz zeichnet sich erfindungsgemäß dadurch aus, dass das Koppelglied ausgelegt ist, um den Verriegelungsmechanismus beim Vorklappen der Rückenlehne zu dem Sitzteil hin bei Erreichen eines vorbestimmten Neigungswinkels zu entriegeln bzw. freizugeben, sodass die Neigung der Rückenlehne bei verriegeltem Sitzteil durch Vorklappen der Rückenlehne bis zu dem vorbestimmten Neigungswinkel hin veränderbar ist und das entriegelte bzw. freigegebene Sitzteil durch weiteres Vorklappen der Rückenlehne in die vorgelagerte Position absenkbar ist.

Erfindungsgemäß betätigt das Koppelglied den Verriegelungsmechanismus automatisch und selbsttätig zum Entriegeln bzw. Freigeben des Sitzteils, wenn die Rückenlehne bis zu dem vorbestimmten Neigungswinkel vorgeklappt ist. Somit sind zusätzliche Bauelemente zum Verriegeln und Entriegeln des Sitzteils nicht mehr erforderlich, was Kosten sparen hilft und den Aufbau einfacher gestaltet. Vorteilhaft ist ferner, dass der Kraftfahrzeugsitz in einfacher und intuitiver Weise bedient werden kann. Während einer ersten Phase, in welcher die Rückenlehneneinstellung von der Sitzumklappung entkoppelt ist, kann der Neigungswinkel der Rückenlehne durch freies bzw. ungehindertes Verschwenken der Rückenlehne eingestellt werden, ohne dass das Sitzteil entriegelt oder verstellt wird. Während einer zweiten Phase, in der die Rückenlehne bis zu dem vorbestimmten Neigungswinkel vorgeklappt ist, um den Verriegelungsmechanismus des Sitzteiles zu betätigen, wird das Sitzteil automatisch entriegelt, ohne dass hierfür weitere Elemente betätigt werden müssen.

Während einer letzten Phase wird durch weiteres Vorklappen der Rückenlehne schließlich das Sitzteil nach vorne gelagert und abgesenkt, wobei diese Bewegung des Sitzteils durch das Umklappen der Rückenlehne angetrieben wird, weil die Rückenlehne mit einem Verstellmechanismus zum Verstellen des Sitzteiles gekoppelt ist.

Zwischen der vorgenannten zweiten Phase und der vorgenannten letzten Phase kann eine weitere Phase vorgesehen sein, während der das Sitzteil entriegelt ist, der Verstellmechanismus zum Verstellen des Sitzteils beim weiteren Vorklappen der Rückenlehne jedoch noch nicht betätigt wird, sodass Fertigungstoleranzen und durch variierende Grundeinstellungen des Kraftfahrzeugsitzes bedingte Abweichungen ausgeglichen werden können.

Bevorzugt ist der Mechanismus zum Verstellen des Sitzteils als Schwenkhebeleinrichtung mit einem vorderen und einem hinteren Verstellhebel, bevorzugt in Form einer Schwinge, ausgebildet.

Grundsätzlich kann der Mechanismus zum Verstellen des Sitzteils jedoch als beliebiger anderer Mechanismus ausgelegt sein, der dazu ausgelegt ist, um das Sitzteil vorzulagern und gleichzeitig abzusenken. Beispielsweise kann zumindest eine geeignet ausgebildete Führungskulisse an einem fahrzeugseitig fest angebundenen Seitenteil vorgesehen sein, um das Sitzteil geeignet zu führen, zu welchem Zweck beispielsweise ein Zapfen oder dergleichen in die zumindest eine Führungskulisse eingreift. Eine oder mehrere solcher Führungskulissen können selbstverständlich auch mit einem Schwenkhebel oder dergleichen kombiniert werden.

Der Verriegelungsmechanismus zum Verriegeln des Sitzteiles in der Gebrauchslage kann in bekannter Weise als Riegel, Drehfalle, Klinkenmechanismus oder dergleichen ausgebildet sein. Die Verriegelung erfolgt bevorzugt karosseriefest an Verankerungspunkten, die an dem Fahrzeugboden vorgesehen sind, kann jedoch grundsätzlich auch an entlang dem Fahrzeugboden längs verschiebbaren Elementen erfolgen, beispielsweise an einer aus dem Stand der Technik bekannten Sitz-Schlittenführung.

Bevorzugt umfasst das Koppelglied zumindest einen Koppelhebel, der außerhalb der Schwenkachse der Rückenlehne angelenkt ist und ein Ende aufweist, das mit dem Mechanismus zum Verlagern und Absenken des Sitzteils zusammenwirkt, um die Rückenlehne beim weiteren Vorklappen von dem vorbestimmten Neigungswinkel mit dem entriegelten Sitzteil zu koppeln und so die Bewegung zum Vorlagern und Absenken des Sitzteils anzutreiben. Beispielsweise kann an dem einen Ende des Koppelhebels ein Dreh-Schiebegelenk vorgesehen sein, über das die Schwenkbewegung der Rückenlehne auf den Mechanismus zum Verstellen bzw. zum Vorlagern und Absenken des Sitzteiles übertragen wird.

Bevorzugt weist das Verriegelungselement eine Verriegelungsklaue auf, die in eine karosseriefeste Verriegelungsnase oder einen karosseriefesten Verriegelungsbolzen eingreift oder diese bzw. diesen niederdrückt. Bevorzugt ist das Verriegelungselement als Hebel ausgebildet, der um eine karosseriefeste Schwenkachse schwenkbar ist. Dies ermöglicht einen besonders kompakten Aufbau.

Bevorzugt weist der Koppelhebel jeweils einen Vorsprung oder einen Zapfen auf, der bei Erreichen des vorbestimmten Neigungswinkels in Anlage zu dem zugeordneten Verriegelungshebel gelangt, um diesen beim weiteren Vorklappen der Rückenlehne um die karosseriefeste Schwenkachse zu schwenken.

Gemäß einer weiteren Ausführungsform kann der Verriegelungsmechanismus ein erstes und ein zweites Verriegelungselement umfassen, die so miteinander zusammenwirken, um das Sitzteil in der Gebrauchslage zu verriegeln. Durch die zweigliedrige Ausbildung des Verriegelungsmechanismus kann die Entriegelung des Sitzteils in vorteilhaft einfacher und präziser Weise gesteuert werden. Beispielsweise können die Verriegelungselemente gemeinsam einen Getriebemechanismus ausbilden, um ein Verriegelungselement zu betätigen oder freizugeben.

Dabei kann der Koppelhebel derart mit dem zweiten Verriegelungselement zusammenwirken, dass das zweite Verriegelungselement beim weiteren Vorklappen der Rückenlehne von dem vorbestimmten Neigungswinkel das erste Verriegelungselement freigibt, um das Sitzteil freizugeben. Bevor der vorbestimmte Neigungswinkel jedoch erreicht ist, also während der vorgenannten ersten Phase, der Verstellung der Rückenlehne, nur das erste Verriegelungselement betätigt, beispielsweise als vorbereitender Vorgang, um ein rasches und präzises Entriegeln des Sitzteils zu ermöglichen.

Besonders bevorzugt sind dabei das erste und zweite Verriegelungselement jeweils als schwenkbar gelagerter Hebel ausgebildet.

Für eine präzise Steuerung der Entriegelung des Sitzteils kann der zweite Hebel einen Ansatz und eine dem Ansatz gegenüberliegende Anlagefläche für eine Kopplung mit dem Koppelhebel aufweisen, wobei der Ansatz den ersten Hebel beim weiteren Vorklappen der Rückenlehne von dem vorbestimmten Neigungswinkel freigibt.

Dabei kann ein Verriegelungsbolzen zum Verriegeln des Sitzteils in der Gebrauchslage mit dem Sitzteil verbunden oder gekoppelt sein, beispielsweise über den Mechanismus zum Verlagern und Absenken des Sitzteils. Diese Ausführungsform macht einen karosseriefesten Verriegelungsbolzen oder dergleichen überflüssig, was sich insbesondere bei herausnehmbaren Sitzen oder Sitzbankreihen als sehr vorteilhaft erweist.

Bevorzugt weist der jeweilige Koppelhebel eine Ausnehmung, beispielsweise in Form eines Langloches, auf, in welche ein Vorsprung, beispielsweise ein Bolzen oder Zapfen, des einen Hebels der Schwenkhebeleinrichtung eingreift, um das Drehschiebegelenk auszubilden. Alternativ kann auch ein Nocken und eine korrespondierende Kulissenführung für den Nocken vorgesehen sein, um die Rückenlehne mit dem Sitzteil zu koppeln.

Bevorzugt liegt der Vorsprung bzw. Zapfen an dem hinteren Ende der Ausnehmung an, wenn das Sitzteil während der vorstehend beschriebenen letzten Phase beim weiteren Vorklappen der Rückenlehne vorgeschwenkt und abgesenkt wird.

Die Ausnehmung kann so ausgelegt sein, dass zwischen dem Vorsprung bzw. Zapfen und dem hinteren Ende der Ausnehmung ein Spalt bzw. Überhub verbleibt, wenn die Rückenlehne unter dem vorbestimmten Neigungswinkel geneigt ist und das Sitzteil entriegelt ist. Somit wird beim weiteren Umklappen der Rückenlehne das Sitzteil noch nicht verstellt, was den Ausgleich von Fertigungstoleranzen und dergleichen ermöglicht.

Ein ganz besonders kompakter Aufbau lässt sich erzielen, wenn der Mechanismus zum Verlagern und Absenken des Sitzteils einen Hebel umfasst, der zwischen dem Verriegelungselement und dem Koppelhebel angeordnet ist. Bevorzugt sind dabei der eine Hebel des Mechanismus zum Vorlagern und Absenken des Sitzteils und das Verriegelungselement um eine gemeinsame Achse schwenkbar.

Gemäß einer weiteren Ausführungsform ist das Verriegelungselement als Niederdrück-Element ausgebildet und wird das Sitzteil durch Niederdrücken des Niederdruck-Elementes entriegelt bzw. freigegeben.

Gemäß einer weiteren Ausführungsform ist der Koppelhebel als zweigliedriger Hebel ausgebildet, wobei an dem Mechanismus zum Vorlagern und Absenken des Sitzteils zumindest eine Anschlagnase bzw. ein Mitnehmer ausgebildet ist, sodass der Koppelhebel im Anschlag mit einer Anschlagnase beim weiteren Vorklappen der Rückenlehne den Mechanismus betätigt, um das Sitzteil nach vorne zu verlagern und abzusenken. Eine solche Anschlagnase bzw. Mitnehmer kann beispielsweise als Vorsprung, Aussparung bzw. Vertiefung, Öffnung oder Koppelglied ausgebildet sein.

Dabei kann an dem Mechanismus zum Vorlagern und Absenken des Sitzteils auch ein zusätzlicher, entsprechend ausgebildeter Mitnehmer vorgesehen sein, der eine Koppelung des Koppelhebels mit dem Mechanismus zum Verstellen des Sitzteils bewirkt, sodass das Sitzteil beim Zurückklappen der Rückenlehne zu dem vorbestimmten Neigungswinkel aus der vorgelagerten, abgesenkten Position in die Gebrauchslage zurückgeführt bzw. mitgenommen wird, um dort wieder verriegelt werden zu können.

Ganz besonders bevorzugt ist der Kraftfahrzeugsitz als Rücksitz für Kraftfahrzeuge mit zwei oder mehr Sitzreihen ausgebildet, sodass durch Vorklappen der Rückenlehne und nach vorne Verlagern und Absenken des Sitzteils eine sich im Wesentlichen waagerecht erstreckende Ladefläche geschaffen werden kann.

Nachfolgend wird die Erfindung in beispielhafter Weise und unter Bezugnahme auf die beigefügten Zeichnungen beschrieben werden, woraus sich weitere Merkmale, Vorteile und zu lösenden Aufgaben ergeben werden. Es zeigen:
Fig. 1a und 1b in einer schematischen Seitenansicht einen Kraftfahrzeugsitz gemäß einer ersten und einer zweiten Ausführungsform der vorliegenden Erfindung in einer Gebrauchslage;
Fig. 2a und 2b den Kraftfahrzeugsitz gemäß den Fig. 1a und 1b, wobei die Rückenlehne in etwa senkrecht steht und das Sitzteil verriegelt ist;
Fig. 3a und 3b den Kraftfahrzeugsitz gemäß den Fig. 1a und 1b, wobei die Rückenlehne bis zu einem vorbestimmten Neigungswinkel vorgeklappt ist, in welcher Stellung das Sitzteil entriegelt ist;
Fig. 4a und 4b den Kraftfahrzeugsitz gemäß den Fig. 1a und 1b, wobei die Rückenlehne noch weiter vorgeklappt ist und das Sitzteil vorgeschwenkt ist;
Fig. 5a und 5b den Kraftfahrzeugsitz gemäß den Fig. 1a und 1b in einer Stellung, in der zur Schaffung einer Ladefläche die Rückenlehne auf das Sitzteil geklappt ist und das Sitzteil vorgeschwenkt und abgesenkt ist;
Fig. 6 eine Detailansicht des Kraftfahrzeugsitzes gemäß der Fig. 1;
Fig. 7a-7d in einer schematischen Übersicht fünf verschiedene Phasen beim Vorklappen der Rückenlehne eines Kraftfahrzeugsitzes gemäß einer dritten Ausführungsform der vorliegenden Erfindung; und
Fig. 8a-8c in einer Gegenüberstellung weitere mögliche Ausführungsformen mit zumindest einer Führungskulisse zum Führen des Sitzteils beim Vorlagern und Absenken des Sitzteils.

In den Figuren bezeichnen identische Bezugszeichen identische oder im Wesentlichen gleich wirkende Elemente oder Elementgruppen.

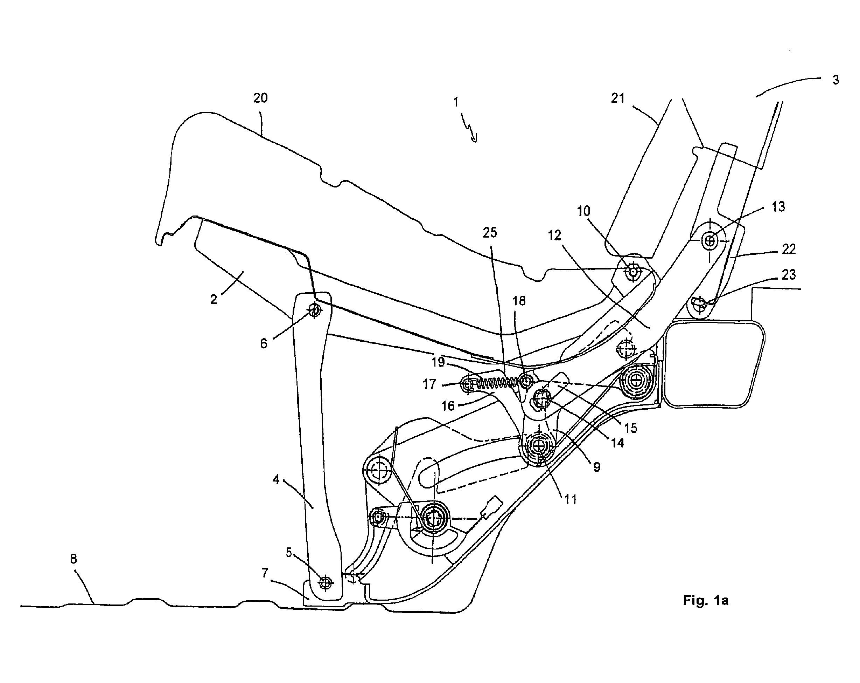

Die Fig. 1a zeigt in einer schematischen Seitenansicht einen Kraftfahrzeugsitz gemäß einer ersten Ausführungsform der vorliegenden Erfindung in einer Gebrauchslage. Der insgesamt mit 1 bezeichnete Kraftfahrzeugsitz (nachfolgend auch abgekürzt als "Sitz" bezeichnet), ist gemäß der Fig. 1a beispielhaft als Rücksitz ausgebildet, der über das schematisch dargestellte Verankerungselement 7 an dem Fahrzeugboden 8 befestigt ist. Der Sitz 1 umfasst ein Sitzteil 2 mit einer Bepolsterung 20 und eine Rückenlehne 3 mit einer Bepolsterung 21. In der in der Fig. 1a gezeigten Gebrauchslage ist die Rückenlehne 3 unter einem spitzen Winkel nach hinten geneigt und ist das Sitzteil 2 mit der Bepolsterung 20 unter einem spitzen Winkel schräg nach hinten geneigt.

Die Rückenlehne 3 kann um die Schwenkachse 23 geschwenkt und nach vorne geklappt werden. Das Sitzteil 2 ist in der in der Fig. 1a gezeigten Gebrauchslage verriegelt und kann somit in der Gebrauchslage nicht nach vorne geschwenkt und/oder abgesenkt werden. Zur Verriegelung des Sitzteils 2 ist ein als Hebel ausgebildetes Verriegelungselement 16 vorgesehen, das in bekannter Weise eine Verriegelungsklaue aufweist, die in eine karosseriefeste Verriegelungsnase oder einen karosseriefesten Verriegelungsbolzen eingreift. Der Verriegelungshebel 16 ist um die untere Schwenkachse 11 schwenkbar.

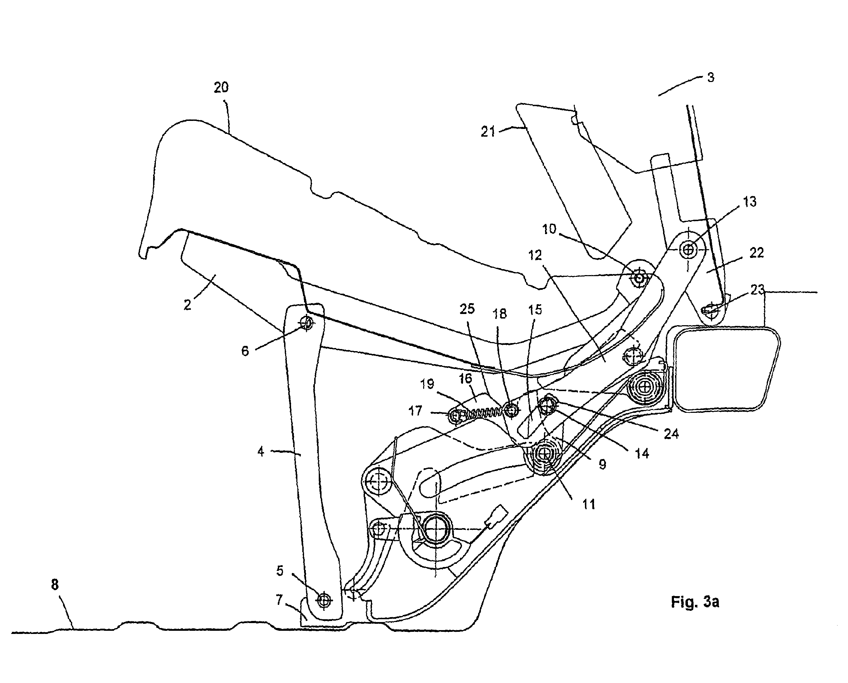

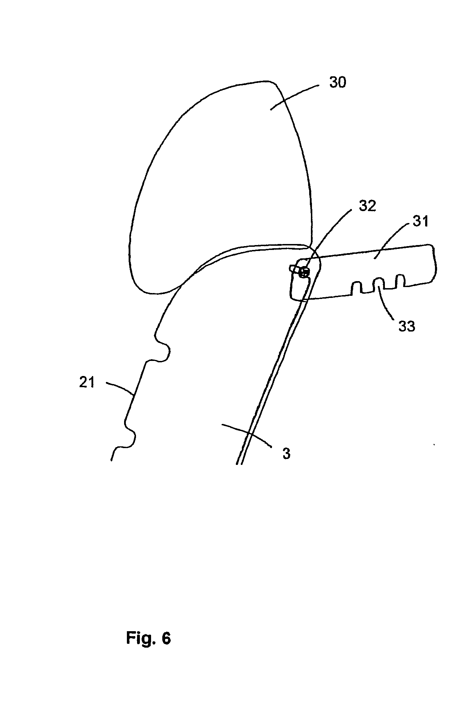

In der Gebrauchslage, d. h. bei verriegeltem Sitzteil 2, ist die Funktion einer Einstellung des Neigungswinkels der Rückenlehne 3 entkoppelt zu der Funktion eines Verschwenkens und Absenkens des Sitzteils 2, was nachfolgend noch ausführlicher dargelegt werden wird. In der in der Fig. 1a gezeigten Gebrauchslage kann der Neigungswinkel der Rückenlehne 3 bis zu einem vorbestimmten Neigungswinkel, welcher der Fig. 3a entnehmbar ist, vorgeschwenkt werden. Zum Feststellen des Neigungswinkels der Rückenlehne 3 kann ein Verriegelungsmechanismus vorgesehen sein. Ein Beispiel für einen solchen Verriegelungsmechanismus ist beispielhaft in der Fig. 6 gezeigt.

Gemäß der Fig. 6 ist in dem oberen Bereich der Rückenlehne 3, unterhalb der Kopfstütze 30, ein Verriegelungshebel 31 vorgesehen, der um die Schwenkachse 32 schwenkbar ist und an seiner Unterkante eine kammartige Ausbildung in Form mehrerer, vorzugsweise äquidistant zueinander beabstandeter, Aussparungen 33 aufweist. Zum Festlegen des Neigungswinkels der Rückenlehne 3 greift eine der Aussparungen 33 des Verriegelungshebels 31 in der bekannten Weise in einen karosseriefesten Bolzen oder Sperrriegel ein. Grundsätzlich kann zum Verstellen des Neigungswinkels der Rückenlehne 3 auch ein Drehrad oder dergleichen vorgesehen sein, um die Rückenlehne 3 um die Schwenkachse 23 (Fig. 1a) zu schwenken. Durch Lösen des Verriegelungsmechanismus, insbesondere durch Freigeben des in der Fig. 6 dargestellten Verriegelungshebels 31, wird die Rückenlehne 3 freigegeben und kann die Rückenlehne 3 zu dem Sitzteil hin geklappt werden. Erfindungsgemäß wird beim Lösen des Verriegelungsmechanismus der Rückenlehne 3 kein Seilzug oder dergleichen zum Entriegeln des Sitzteils 2 betätigt.

Anhand der Fig. 1a wird nachfolgend der Mechanismus zum Vorklappen der Rückenlehne 3 und zum Verschwenken und Absenken des Sitzteils 2 näher beschrieben werden. Zum Vorschwenken und Absenken des Sitzteils 2 ist eine Schwenkhebeleinrichtung vorgesehen, die einen vorderen Verstellhebel 4 und einen hinteren Verstellhebel 9 umfasst. Der vordere Verstellhebel 4 ist um die untere Schwenkachse 5 des karosseriefesten Verankerungselements 7 schwenkbar und ist im Bereich der oberen Schwenkachse 6 an das Sitzteil 2 angelenkt. Der hintere Verstellhebel 9 ist um die karosseriefeste untere Schwenkachse 11 schwenkbar und ist im Bereich der oberen Schwenkachse 10 an das Sitzteil 2 angelenkt. Das Sitzteil 2 ist als starres Gestänge ausgebildet, das die oberen Schwenkachsen 6, 10 miteinander verbindet. Auf der gegenüberliegenden Seite des Sitzteils 2 können in vergleichbarer Weise ein weiterer vorderer Verstellhebel und ein weiterer hinterer Verstellhebel 9 vorgesehen sein.

Zur Kopplung der Rückenlehne 3 mit dem Sitzteil 2 ist ein Koppelhebel 12 vorgesehen, dessen eines Ende um die Schwenkachse 13 schwenkbar ist, die auf der Seitenwange 22 der Rückenlehne 3 beabstandet zu der Schwenkachse 23 der Rückenlehne 3 angeordnet ist, und an dessen anderem Ende ein Langloch 15 ausgebildet ist, um den Koppelhebel 12 mit dem hinteren Verstellhebel 9 über ein Dreh-Schiebegelenk zu koppeln.

Gemäß der Fig. 1a ist auf der Außenseite des hinteren Verstellhebels 9 ein Zapfen 14 oder ein vergleichbarer Vorsprung ausgebildet, der in das Langloch 15 eingreift und in diesem geführt ist. Wie in der Fig. 1a gezeigt, ist der Zapfen 14 oder der Vorsprung beabstandet zu der unteren Schwenkachse 11 des hinteren Verstellhebels 9, um ein Dreh-Schiebegelenk auszubilden.

Wie in der Fig. 1a gezeigt, ist der hintere Verstellhebel 9 zwischen dem Verriegelungshebel 16 und dem Koppelhebel 12 angeordnet. An dem vorderen Ende des Koppelhebels 12 ist ein sitzeinwärts abragender Zapfen 18 ausgebildet, der in der Gebrauchslage gemäß der Fig. 1a nicht an der schräg verlaufenden Anlagefläche 25 des Verriegelungshebels 16 anliegt. An dem freien Ende des Verriegelungshebels 16 ist ein sitzauswärts abragender Zapfen 17 vorgesehen. In die Zapfen 17, 18 ist eine Zugfeder 19 eingehängt, um den Koppelhebel 12 mit dem Verriegelungshebel 16 zu koppeln und gegeneinander vorzuspannen.

Wie in der Fig. 1a gezeigt, ist in der Gebrauchslage zwischen dem unteren Ende des Langlochs 15 und dem Zapfen 14 ein Spalt ausgebildet, der zum Ausgleich von Fertigungstoleranzen oder als Spiel beim Einstellen des Sitzes 1 dient. Insgesamt befindet sich der Zapfen 14 in der Gebrauchslage jedoch nahe bei dem unteren Ende des Langlochs 15.

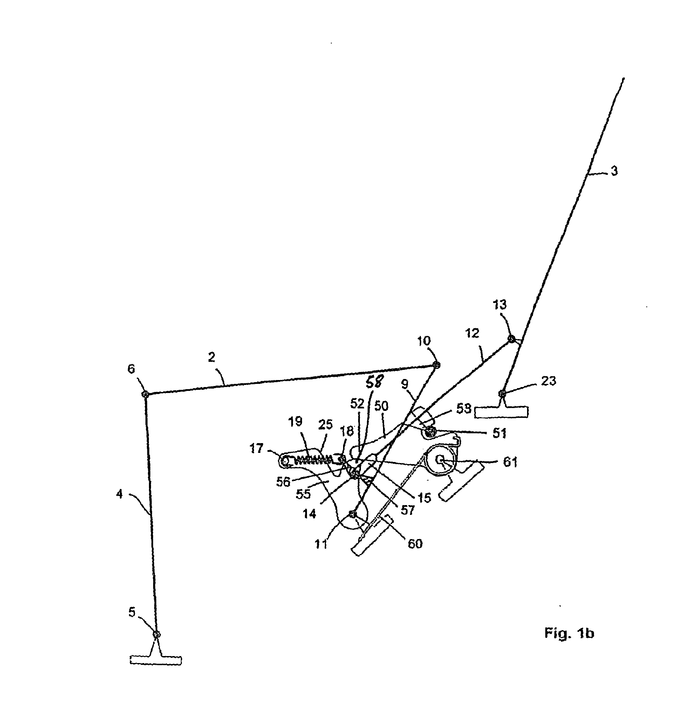

Gemäß der Fig. 1b wird eine zweite Ausführungsform eines erfindungsgemäßen Kraftfahrzeugsitzes in derselben Stellung wie gemäß der Fig. 1a beschrieben werden. In der Fig. 1b sind die überwiegend für die Sitzverstellung des Sitzteils dienenden Elemente, insbesondere die Verstellhebel, schematisch als Linienverbindungen dargestellt, um weitere Einzelheiten eines beispielhaften Verriegelungsmechanismus zum Verriegeln des Sitzteils zu erläutern. In den Figuren 1a und 1b bezeichnen identische Bezugszeichen identische Elemente, deren Beschreibung nachfolgend ausgelassen werden wird.

Gemäß der Fig. 1b weist der Verriegelungsmechanismus zum Verriegeln des Sitzteils 2 einen ersten Verriegelungshebel 50 und einen zweiten Hebel 55 auf, die jeweils um eine karosseriefeste Achse 61 bzw. 11 schwenkbar sind. An dem ersten Verriegelungshebel 50 ist am hinteren Ende eine Aufnahme zum Aufnehmen und Verriegeln des Verriegelungsbolzens 51 vorgesehen. Das vordere Betätigungsende 52 des Verriegelungshebels 50 liegt an einem Ansatz 58 des zweiten Hebels 55 an.

Gemäß der Fig. 1b ist der Zapfen 18 über ein Verbindungselement 56, beispielsweise einen Mitnehmer oder einen Ansatz, mit dem Koppelhebel 12 verbunden und ist der in das Langloch 15 eingreifende Zapfen 14 über ein entsprechendes Verbindungselement 57 mit dem hinteren Verstellhebel 9 verbunden. Der Zapfen 18 ist über die in Verriegelungsrichtung vorgespannte Feder 19 mit dem Zapfen 17 verbunden, um den Koppelhebel mit dem zweiten Hebel 55 zu koppeln.

Gemäß der Fig. 1b liegt der Zapfen 18 noch nicht an der dem Ansatz 58 gegenüber liegenden Anlagefläche 25 des zweiten Hebels 55 an. In dieser Stellung bilden die beiden Hebel 50 und 55 ein Schloss zum Verriegeln des Sitzteils 2.

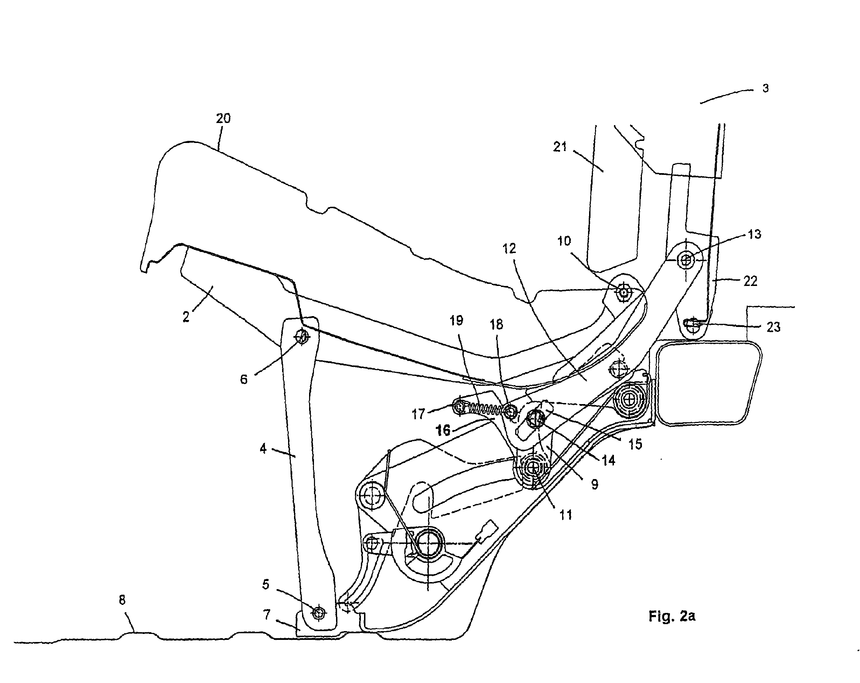

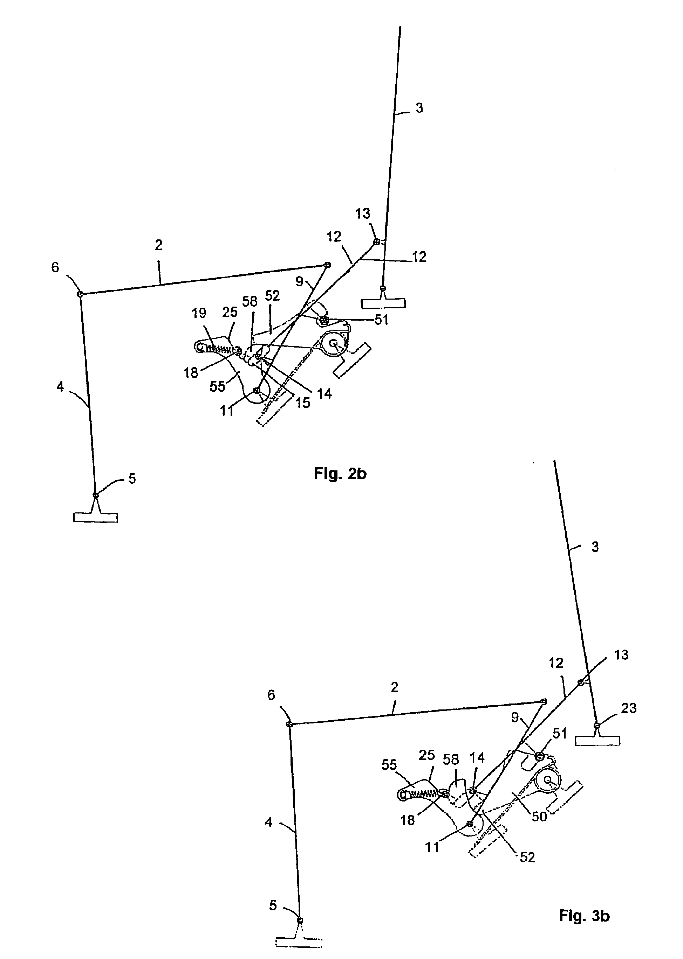

Anhand Figuren 2a bis 5a bzw. 2b bis 5b wird nachfolgend eine Vorgehensweise zum Umklappen der Rückenlehne und zum Schaffen einer Ladefläche beschrieben werden. Dabei werden die erste und zweite Ausführungsform unmittelbar vergleichend gegenübergestellt. Nach Lösen des Verriegelungsmechanismus der Rückenlehne (vgl. Fig. 6) ist die Rückenlehne 3 gemäß der Fig. 2a in eine im Wesentlichen senkrechte Position vorgeklappt. Durch das Vorklappen der Rückenlehne 3 wird der Koppelhebel 12 abwärts gedrückt und gleitet der Zapfen 14 in dem Langloch 15 hin zu dem oberen Ende des Langlochs 15. Schließlich gerät der Zapfen 18 in Anlage zu der Anlagefläche 25 des Verriegelungshebels 16. Gemäß der Fig. 2a befindet sich das Sitzteil 2 noch in der Gebrauchslage, in welcher der Verriegelungshebel 16 das Sitzteil 2 verriegelt.

Gemäß der Fig. 2b ist der mit dem Koppelhebel 12 gekoppelte Zapfen 18 in Anlage zu der Anlagefläche 25 des zweiten Hebels 55 gelangt und befindet sich der Zapfen 14 nahe der Mitte des Langlochs 15. In dieser Stellung ist der Verriegelungsbolzen durch die Aufnahme am hinteren Ende des Verriegelungshebels 50 verriegelt.

Beim weiteren Vorklappen der Rückenlehne 3 wird der Koppelhebel 12 weiter nach unten gedrückt, bis schließlich, wie in der Fig. 3a gezeigt, der Zapfen 14 nahe bei dem oberen Ende des Langlochs 15 angelangt ist. Weil der Zapfen 18 an der Anlagefläche 25 des Verriegelungshebels 16 anliegt, wird der Verriegelungshebel 16 beim weiteren Vorklappen der Rückenlehne 3 im Gegenuhrzeigersinn um die untere Schwenkachse 11 geschwenkt. Schließlich erreicht die Rückenlehne 3 einen vorbestimmten Neigungswinkel, in welchem der Verriegelungshebel 16 entriegelt ist und das Sitzteil 2 freigibt. In der entriegelten Stellung greift die Verriegelungsklaue (nicht gezeigt) des Verriegelungshebels 16 nicht mehr in die karosseriefeste Verriegelungsnase oder den karosseriefesten Verriegelungsbolzen ein. Es sei angenommen, dass in der Stellung gemäß der Fig. 3a die Rückenlehne 3 den vorbestimmten Neigungswinkel einnimmt. Wie in der Fig. 3a gezeigt, ist in dieser Stellung der Zapfen 14 noch nicht in Anlage zu dem oberen Ende des Langlochs 15, sondern ist vielmehr ein Überhub bzw. Spalt 24 zwischen dem Zapfen 14 und dem oberen Ende des Langlochs 15 ausgebildet, welcher zum Ausgleich von Fertigungstoleranzen und dergleichen dient.

Die Fig. 3b zeigt den Kraftfahrzeugsitz gemäß der zweiten Ausführungsform in einer Stellung, in welcher der Verriegelungsbolzen 51 freigegeben ist. Gemäß der Fig. 3b hat der Zapfen 18, in Anlage zu der Anlagefläche 25, den zweiten Hebel 55 soweit im Gegenuhrzeigersinn verschwenkt, dass das Betätigungsende 52 des Verriegelungshebels 50 über den Ansatz 58 des Verriegelungshebels 50 hinaus gerutscht und an der gewölbten Flanke des Ansatzes 58 hinabgeglitten ist. Beim Hinabgleiten des Betätigungsendes 52 an der gewölbten Flanke des Ansatzes 58 wird der Verriegelungshebel 50, welcher durch die Drehfeder 60 in die Freigabestellung vorgespannt ist, im Gegenuhrzeigersinn verschwenkt, sodass die Aufnahme am hinteren Ende des Verriegelungshebels 50 schließlich den Verriegelungsbolzen 51 freigibt, um so das Sitzteil 2 zu entriegeln. Weil die Flanke des Ansatzes 58 konkav einwärts gewölbt ist, kann diese Bewegung des Verriegelungshebels in die Freigabestellung sehr rasch erfolgen. Die Stellung, in welcher der Verriegelungsbolzen 51 freigegeben wird, sowie der Bewegungsablauf wird dabei durch die Geometrie des Ansatzes 58 und des Betätigungsendes 52 des Verriegelungshebels 50 präzise vorgegeben.

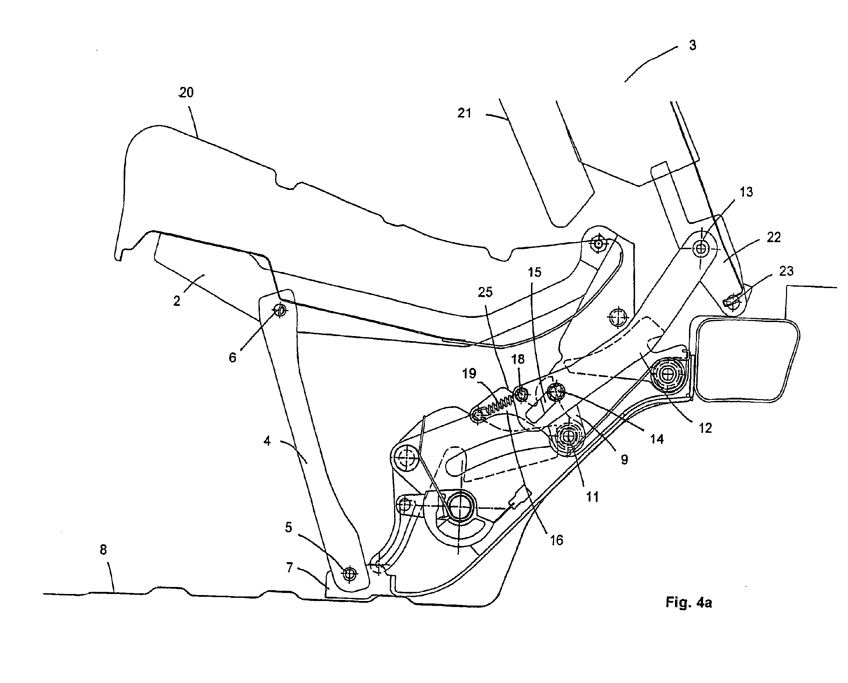

Beim weiteren Vorklappen der Rückenlehne 3 gerät schließlich der Zapfen 14 in Anlage zu dem oberen Ende des Langlochs 15, sodass der Koppelhebel 12 den Zapfen 14 über das vorstehend beschriebene Dreh-Schiebegelenk nach unten drückt und so den hinteren Verstellhebel 9 im Gegenuhrzeigersinn vorschwenkt. Dabei gleitet der sitzeinwärts abragende Zapfen 18 auf dem Koppelhebel 12 weiter an der Anlagefläche 25 des Verriegelungshebels 16 und wird der Verriegelungshebel 16 weiter im Gegenuhrzeigersinn um die Schwenkachse 11 geschwenkt, ohne sich in einem Eingriff mit einem Verriegelungselement zu befinden. Durch die spezielle Ausbildung des vorderen Verstellhebels 4 und des hinteren Verstellhebels 9 zu einer Schwenkhebeleinrichtung wird gewährleistet, dass das Sitzteil 2 mit der Bepolsterung 20 beim weiteren Vorschwenken der Rückenlehne 3 vorgelagert und abgesenkt wird. Die Fig. 4a zeigt den Kraftfahrzeugsitz in einer Zwischenstellung mit vorgeklappter Rückenlehne 3.

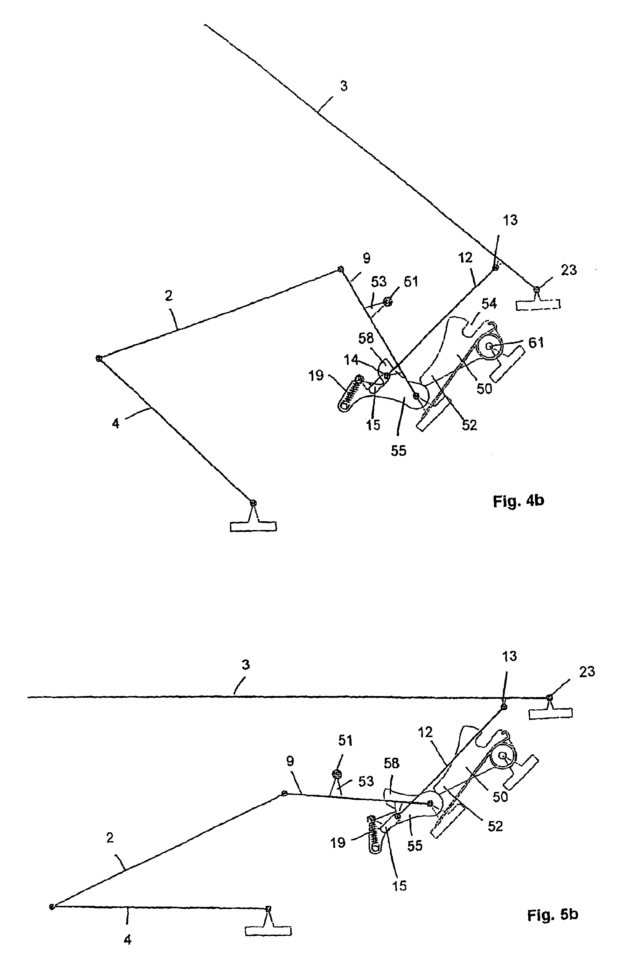

Gemäß der Fig. 4b wird dabei der zweite Hebel 55 weiter im Gegenuhrzeigersinn vorgeschwenkt und beginnt das Sitzteil 2 damit, sich zusätzlich zur Schwenkbewegung auch abzusenken. Gemäß der Fig. 4b verbleibt dabei das Betätigungsende 52 an dem unteren Ende des zweiten Hebels 55, so dass sich die Winkelstellung des Verriegelungshebels 50 mit der Aufnahme 54 für den Verriegelungsbolzen praktisch kaum mehr ändert. Wie der Fig. 4b entnommen werden kann, ist der Verriegelungsbolzen über ein Verbindungselement 53 mit dem hinteren Verstellhebel 9 verbunden, so dass gemäß der zweiten Ausführungsform kein karosseriefester Verriegelungsbolzen erforderlich ist.

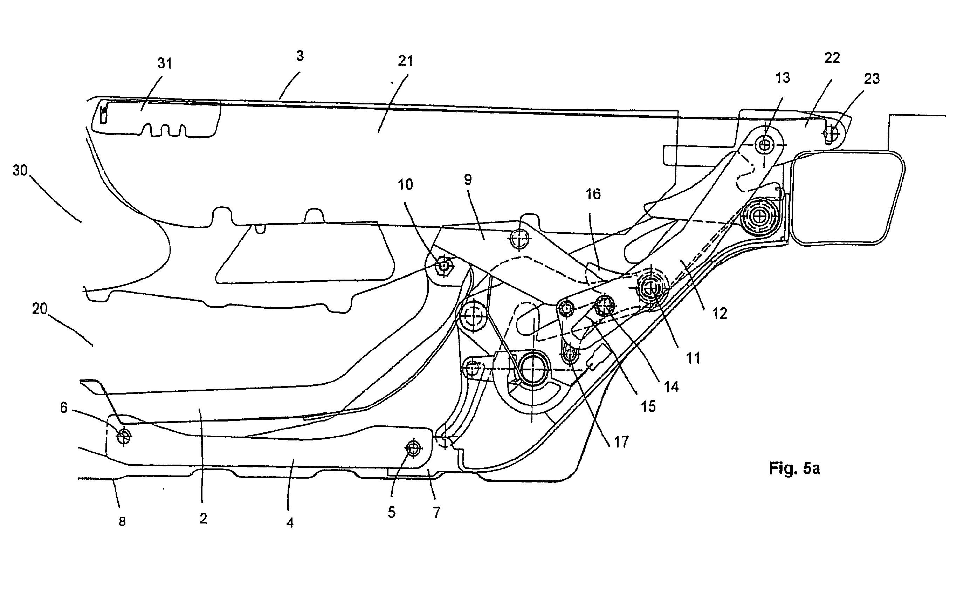

Schließlich wird die Stellung gemäß der Fig. 5a eingenommen, in welcher die Rückenlehne 3 so weit auf das Sitzteil 2 geklappt ist, dass eine im Wesentlichen waagerecht ausgerichtete Ladefläche ausgebildet ist. In dieser Lage ist der vordere Verstellhebel 4 vollständig nach vorne geschwenkt und liegt dieser an dem Fahrzeugboden 8 an. Auch der hintere Verstellhebel 9 ist vollständig vorgeschwenkt und im Wesentlichen waagerecht ausgerichtet. In dieser Lage liegt der Zapfen 14 nach wie vor an dem oberen Ende des Langlochs 15 an. Wie den Fig. 3a bis 5a ohne weiteres entnommen werden kann, kann der Verriegelungshebel 16 über einen relativ großen Winkelbereich, beispielsweise um etwa 90° oder mehr, um die Schwenkachse 11 geschwenkt werden, ohne in ein Verriegelungselement oder dergleichen, beispielsweise in einen karosseriefesten Verriegelungsbolzen, einzugreifen.

Um den Fahrzeugsitz wieder in die Gebrauchslage gemäß der Fig. 1a zu überführen, werden die vorstehend beschriebenen Schritte in umgekehrter Reihenfolge ausgeführt, wird also die Rückenlehne 3 im Uhrzeigersinn hochgeklappt, bis schließlich der Verriegelungshebel 16 wieder die Stellung gemäß der Fig. 2 einnimmt, in welcher das Sitzteil 2 verriegelt ist. In der verriegelten Stellung des Sitzteils 2 kann die Rückenlehne 3 noch weiter frei nach hinten geschwenkt werden, bis schließlich durch Verriegeln der Rückenlehne 3, beispielsweise mithilfe des in der Fig. 6 gezeigten Verriegelungshebels 31, der Neigungswinkel der Rückenlehne 3 festgelegt ist.

Wie dem Vergleich der Fig. 3b und 4b entnommen werden kann, drückt der Verriegelungsbolzen 51 beim Zurückklappen der Rückenlehne 3 auf das untere Ende der Aufnahme 54 für den Verriegelungsbolzen 51, um so eine Kraft auf den Verriegelungshebel 50 auszuüben. Dadurch wird der Verriegelungshebel 50, gegen die Rückstellkraft der Drehfeder 60, im Uhrzeigersinn um die Drehachse 61 geschwenkt. Dabei gleitet das Betätigungsende 52 des Verriegelungshebels 50 an der konkav gewölbten Flanke des Ansatzes 58 des zweiten Hebels 55 entlang, bis schließlich das obere Ende des Ansatzes 58 erreicht ist. Beim weiteren Zurückklappen der Rückenlehne 3 schnappt schließlich der Ansatz 58 des zweiten Hebels 55, aufgrund der von der Feder 19 ausgeübten Rückstellkraft, unter die untere Seite des Betätigungsendes 52 des Verriegelungshebels 50. Dabei wird schließlich der Verriegelungsbolzen 51 wieder von der Aufnahme 54 und dem Verriegelungshebel 50 verriegelt. Aufgrund der konkav einwärts gewölbten Flanke des Ansatzes 58 des zweiten Hebels 55 erfolgt die Verriegelung des Verriegelungsbolzens 51 rasch, bei nur geringfügigem weiterem Zurückklappen der Rückenlehne 3.

Wie den Fig. 1 bis 5b ohne weiteres entnommen werden kann, wird der Verriegelungshebel 16 bzw. 50 automatisch und ohne Betätigung weiterer Elemente, beispielsweise eines aus dem Stand der Technik bekannten Seilzugs, von dem Koppelhebel 12 betätigt.

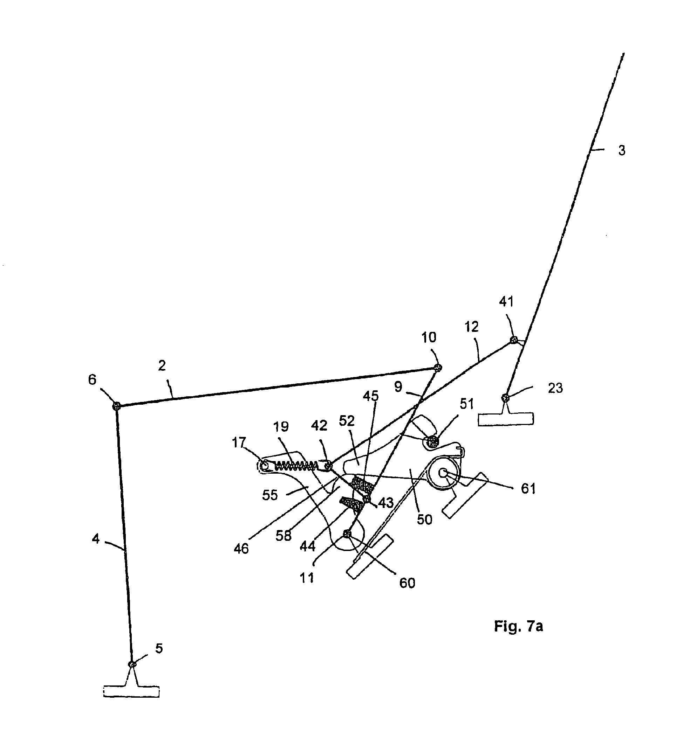

Die Figuren 7a-7d zeigen einen Kraftfahrzeugsitz gemäß einer dritten Ausführungsform der vorliegenden Erfindung in den Bewegungsphasen gemäß den Fig. 1a-4a bzw. 1b-4b. In den Figuren 7a-7d sind die wesentlichen Hebel schematisch nur als Linienverbindungen angedeutet, um das Verständnis zu erleichtern. Gleiche Bezugszeichen bezeichnen hierbei dieselben Elemente, wie vorstehend anhand der Fig. 1 bis 6 beschrieben, sodass deren Beschreibung nachfolgend ausgelassen werden kann.

Gemäß den Figuren 7a-7d ist der Koppelhebel 12 als zweigliedriger Hebel ausgebildet, der an den Gelenkachsen 41 bzw. 43 mit der Rückenlehne 3 bzw. dem hinteren Verstellhebel 9 verbunden ist und eine weitere Gelenkachse 42 aufweist, an welche die Feder 19 angekoppelt ist, beispielsweise über einen Zapfen oder dergleichen.

Der Verriegelungsmechanismus ist vergleichbar zu der zweiten Ausführungsform ausgebildet und umfasst einen Verriegelungshebel 50 und einen zweiten Hebel 55.

Gemäß der Fig. 7a liegt der Arm 46 des Koppelhebels 12 an dem oberen Mitnehmer 45 an, der mit dem hinteren Verstellhebel 9 verbunden ist. Der Mitnehmer 45 kann so zum Zurückführen des Sitzteils 2 beim Zurückklappen der Rückenlehne 3 verwendet werden.

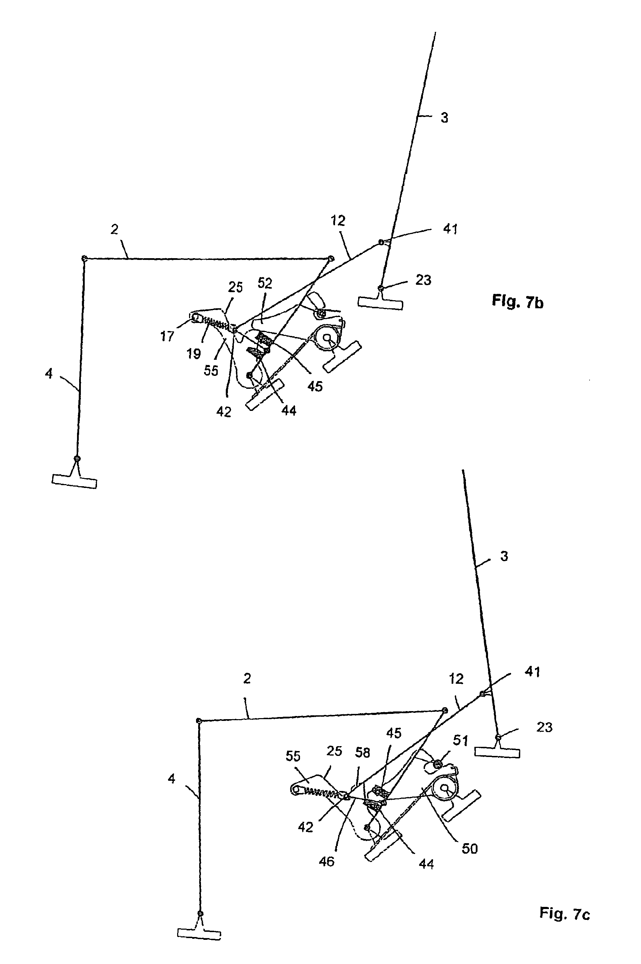

Durch Vorklappen der Rückenlehne 3 im Gegenuhrzeigersinn wird der Koppelhebel 12 niedergedrückt und gelangt der an der Gelenkachse 42 befindliche Zapfen in Anlage zu der Anlagefläche 25 des zweiten Hebels 55. In der Stellung gemäß der Fig. 7b befindet sich der Arm 46 des Koppelhebels 12 in etwa in der Mitte zwischen dem unteren Mitnehmer 44 und dem oberen Mitnehmer 45 des hinteren Verstellhebels 9.

Durch weiteres Vorklappen der Rückenlehne 3 gibt schließlich der Verriegelungshebel 50 den Verriegelungsbolzen 51 frei. In dieser Stellung liegt gemäß der Fig. 7c der Arm 46 des Koppelhebels 12 an dem unteren Mitnehmer 44 an.

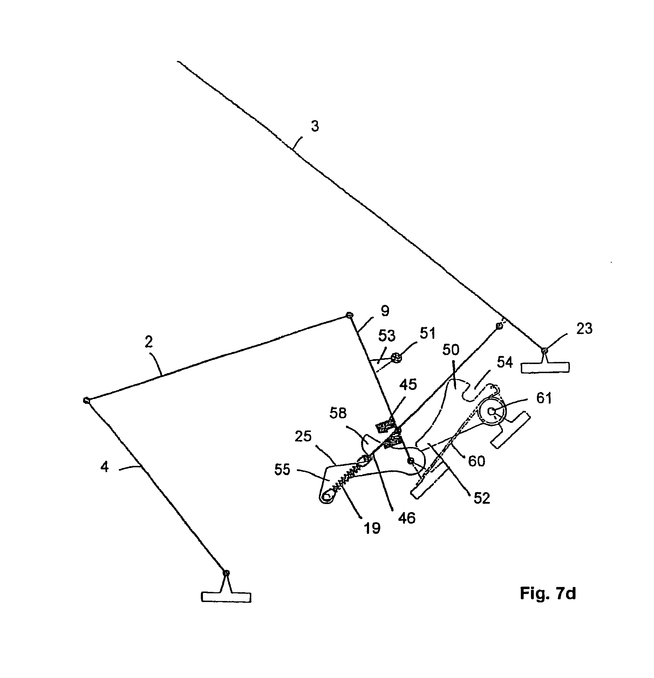

Beim weiteren Vorklappen der Rückenlehne 3 wird der Mitnehmer 44 von dem Arm 46 des Koppelhebels 12 mitgenommen, um so den hinteren Verstellhebel 9 im Gegenuhrzeigersinn vorzuschwenken und das Sitzteil 2 abzusenken, wie in der Fig. 7d gezeigt.

Beim weiteren Vorklappen der Rückenlehne 3 wird schließlich eine Stellung erreicht, in welcher eine ebene Ladefläche durch die Rückseite der Rückenlehne 3 ausgebildet ist.

Wie den Figuren 7a-7d entnommen werden kann, wird der hintere Verstellhebel 9 beim Zurückklappen der Rückenlehne 3 von der abgesenkten Position zurück in die Gebrauchslage gemäß der Fig. 7a von dem Mitnehmer 45 mitgenommen, der an dem Arm 46 des Koppelhebels 12 anliegt. Der Koppelhebel 12 und der hintere Verstellhebel 9 sind gegeneinander vorgespannt, beispielsweise mithilfe der Zugfeder 19. Beim Zurückschwenken der Rückenlehne 3 im Uhrzeigersinn wird somit der hintere Verstellhebel 9 im Uhrzeigersinn zurückgeschwenkt und wird somit das Sitzteil 2 nach hinten verschoben und zurück geschwenkt.

Das Verriegelungselement 40 gemäß der dritten Ausführungsform kann selbstverständlich auch ein karosseriefester Verriegelungsbolzen sein, der von dem Kipphebel 12 oder von einem mit diesem gekoppelten Element niedergedrückt wird. Selbstverständlich kann ein solches Verriegelungselement gemäß der dritten Ausführungsform auch mitgeführt oder von einem nicht dargestellten Verriegelungshebel, beispielsweise in der anhand der Fig. 1 bis 5b vorstehend beschriebenen Weise, freigegeben werden.

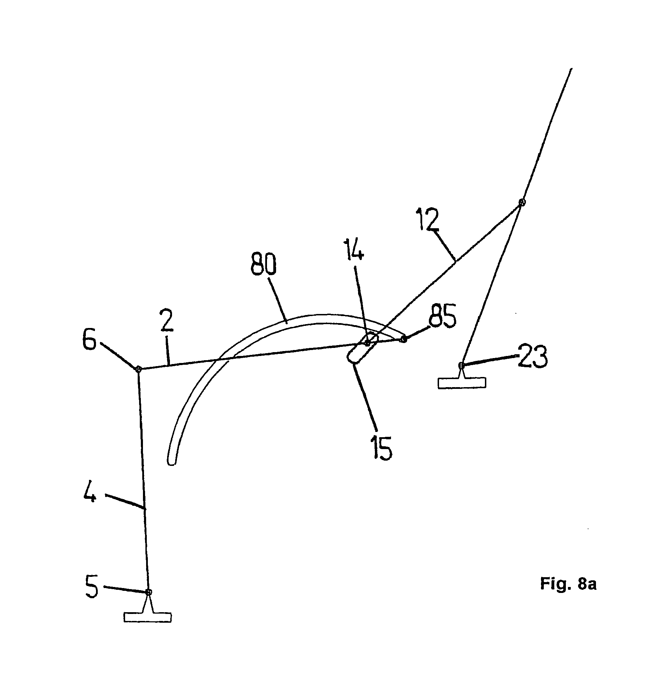

Die Figuren 8a bis 8c zeigen in einer Gegenüberstellung weitere mögliche Ausführungsformen mit zumindest einer Führungskulisse zum Führen des Sitzteils beim Vorlagern und Absenken des Sitzteils.

Gemäß der Fig. 8a ist eine bogenförmig ausgebildete Führungskulisse 80 vorgesehen, in welche ein Element, beispielsweise ein Zapfen 85, am hinteren Ende des Sitzteils 2 eingreift. Die Führungskulisse 80 ist karosseriefest, beispielsweise in einem fahrzeugfest fest angebundenen Seitenteil (nicht dargestellt). Durch die Formgestaltung der Führungskulisse 80 wird der vordere Verstellhebel 4 beim Vorklappen der Rückenlehne 3 um die untere Schwenkachse 5 vorgeschwenkt und so das Sitzteil 2 abgesenkt.

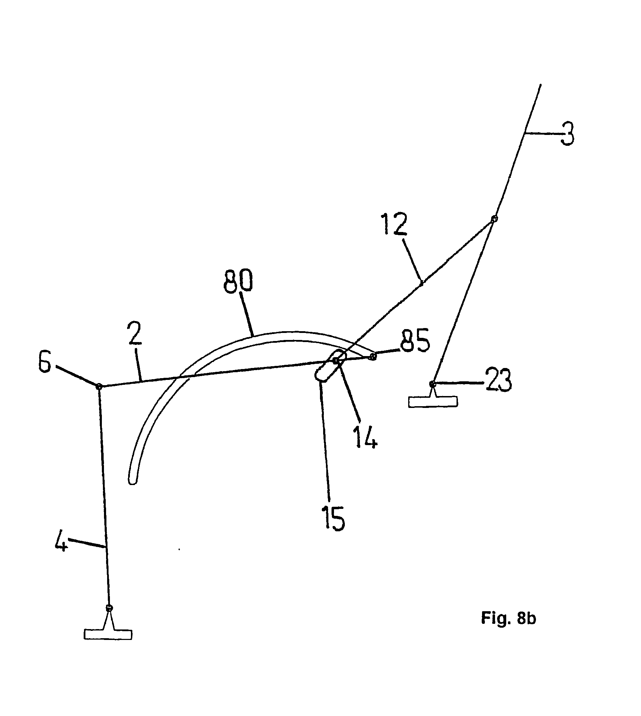

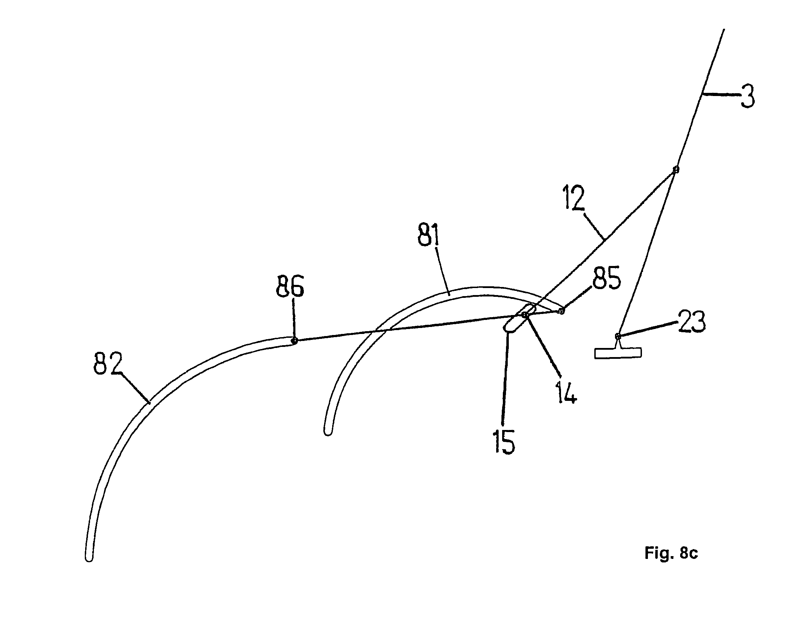

Gemäß der Fig. 8a ist an dem vorderen Ende des Koppelhebels 12 ein Langloch 15 ausgebildet, in welches in der vorstehend beschriebenen Art ein Zapfen 14 eingreift, der mit dem Sitzteil 2 gekoppelt ist. Gemäß der Fig. 8b ist das vordere Ende des Koppelhebels 12 unmittelbar an das Sitzteil 2 angelenkt. Gemäß der Fig. 8c sind zwei bogenförmige Führungskulissen 81 und 82 vorgesehen, in welche mit dem Sitzteil 2 verbundene Zapfen 85 und 86 eingreifen, um die Bewegung des Sitzteils 2 beim Vorklappen der Rückenlehne 3 zu führen. Wie dem Fachmann ohne weiteres ersichtlich sein wird, können derartige Führungskulissen mit weiteren Verstellmechaniken, beispielsweise Schwenkhebeleinrichtungen, in geeigneter Weise kombiniert werden, um den Bewegungsablauf beim Vorklappen der Rückenlehne geeignet zu steuern. Ferner wird dem Fachmann ohne weiteres ersichtlich sein, dass die vorsehend als bogenförmig beschriebenen Führungskulissen auch in anderer Weise ausgebildet sein können, um die Bewegung des Sitzteils geeignet zu führen, beispielsweise in Form von im Wesentlichen geradlinig schräg nach unten verlaufenden Führungskulissen.

### Bezugszeichenliste

- 1: Fahrzeugsitz
- 2: Sitzteil
- 3: Rückenlehne
- 4: Vorderer Verstellhebel
- 5: Untere Schwenkachse
- 6: Obere Schwenkachse
- 7: Verankerungselement
- 8: Fahrzeugboden
- 9: Hinterer Verstellhebel
- 10: Obere Schwenkachse
- 11: Untere Schwenkachse
- 12: Koppelhebel
- 13: Obere Schwenkachse
- 14: Zapfen / Mitnehmer
- 15: Langloch
- 16: Verriegelungselement / Schlossriegel
- 17: Zapfen
- 18: Zapfen
- 19: Zug-/Druckfeder
- 20: Bepolsterung Sitzteil
- 21: Bepolsterung Rückenlehne
- 22: Seitenwange der Rückenlehne 3
- 23: Schwenkachse der Rückenlehne 3
- 24: Überhub
- 25: Anlagefläche des Verriegelungselements / Schlossriegels
- 30: Kopfstütze
- 31: Rücklehnen-Verriegelungselement
- 32: Schwenkachse
- 33: Aussparung
- 41: Gelenkachse
- 42: Gelenkachse
- 43: Gelenkachse
- 44: Mitnehmer
- 45: Mitnehmer
- 46: Verbindungshebel
- 50: primäres Verriegelungselement
- 51: Verriegelungsbolzen
- 52: Betätigungsende des primären Verriegelungselements 50
- 53: Verbindungselement
- 54: Bolzenaufnahme
- 55: sekundäres Verriegelungselement
- 56: Verbindungselement
- 57: Verbindungselement
- 58: Ansatz am sekundären Verriegelungselement 55
- 60: Drehfeder
- 61: Drehachse
- 80: Führungskulisse
- 81: hintere Führungskulisse
- 82: vordere Führungskulisse
- 85: Zapfen
- 86: Zapfen

## Patentansprüche

1. Kraftfahrzeugsitz, mit klappbarer Rückenlehne (3) und absenkbarem Sitzteil (2), wobei die Rückenlehne (3) in Richtung zu dem Sitzteil (2) klappbar ist und ein Mechanismus (4, 9; 80, 81) vorgesehen ist, sodass das Sitzteil aus einer Gebrauchslage in eine vorgelagerte Position absenkbar ist, wobei
ein Koppelglied (12) vorgesehen ist, um das Umklappen der Rückenlehne (3) mit dem Vorlagern und Absenken des Sitzteils (2) zu koppeln, und wobei
ein Verriegelungsmechanismus (14-16; 50, 51, 55) vorgesehen ist, um das Sitzteil (2) in der Gebrauchslage zu verriegeln,
**dadurch gekennzeichnet, dass** das Koppelglied (12) ausgelegt ist, um den Verriegelungsmechanismus (14-16; 50, 51, 55) beim Vorklappen der Rückenlehne (3) zu dem Sitzteil (2) hin bei Erreichen eines vorbestimmten Neigungswinkels automatisch zu entriegeln, sodass die Neigung der Rückenlehne (3) bei verriegeltem Sitzteil (2) durch Vorklappen der Rückenlehne (3) bis zu dem vorbestimmten Neigungswinkel hin veränderbar ist, ohne dass das Sitzteil (2) entriegelt oder verstellt wird, und das entriegelte Sitzteil (2) durch weiteres Vorklappen der Rückenlehne (3) in Richtung zu dem Sitzteil (2) in die vorgelagerte Position absenkbar ist,
wobei das Koppelglied zumindest einen Koppelhebel (12) umfasst, der jeweils ein Verriegelungselement (16; 50, 55) betätigt, um das Sitzteil (2) zu entriegeln, wenn die Rückenlehne (3) bis zu dem vorbestimmten Neigungswinkel vorgeklappt ist.

2. Kraftfahrzeugsitz nach Anspruch 1, bei dem ein Ende des Koppelhebels (12) um eine Achse (13), die beabstandet zu einer Rückenlehnen-Schwenkachse (23) ist, schwenkbar ist und das andere Ende des Koppelhebels (12) an den Mechanismus (4, 9; 80, 81) zum Absenken des Sitzteils (2) in die vorgelagerte Position angelenkt ist.

3. Kraftfahrzeugsitz nach Anspruch 2, bei dem das Verriegelungselement (16) eine Verriegelungsklaue aufweist, die in eine karosseriefeste Verriegelungsnase oder einen karosseriefesten Verriegelungsbolzen eingreift oder diese bzw. diesen niederdrückt.

4. Kraftfahrzeugsitz nach einem der vorhergehenden Ansprüche, bei dem das Verriegelungselement einen ersten Verriegelungshebel (16; 50) umfasst, der um eine karosseriefeste Schwenkachse (11; 61) schwenkbar ist.

5. Kraftfahrzeugsitz nach Anspruch 4, bei dem der Koppelhebel (12) jeweils einen Vorsprung oder einen Zapfen (18) aufweist, der bei Erreichen des vorbestimmten Neigungswinkels in Anlage zu dem zugeordneten Verriegelungshebel (16) gelangt, um diesen beim weiteren Vorklappen der Rückenlehne (3) um die karosseriefeste Schwenkachse (11) zu schwenken.

6. Kraftfahrzeugsitz nach einem der vorhergehenden Ansprüche, bei dem der Verriegelungsmechanismus ein erstes (50) und ein zweites (55) Verriegelungselement umfasst, die miteinander zusammenwirken, um das Sitzteil (2) in der Gebrauchslage zu verriegeln.

7. Kraftfahrzeugsitz nach Anspruch 6, bei dem der Koppelhebel (12) derart mit dem zweiten Verriegelungselement (55) zusammenwirkt, dass das zweite Verriegelungselement (55) beim weiteren Vorklappen der Rückenlehne (3) von dem vorbestimmten Neigungswinkel das erste Verriegelungselement (50) freigibt, um das Sitzteil (2) freizugeben.

8. Kraftfahrzeugsitz nach Anspruch 6 oder 7, bei dem das erste und zweite Verriegelungselement (50, 55) jeweils als schwenkbar gelagerter Hebel ausgebildet ist.

9. Kraftfahrzeugsitz nach Anspruch 8, bei dem der zweite Hebel (55) einen Ansatz (58) und eine dem Ansatz gegenüberliegende Anlagefläche (25) für eine Kopplung mit dem Koppelhebel (12) aufweist, wobei der Ansatz (58) den ersten Hebel (50) beim weiteren Vorklappen der Rückenlehne (3) von dem vorbestimmten Neigungswinkel freigibt.

10. Kraftfahrzeugsitz nach einem der Ansprüche 6 bis 9, bei dem ein Verriegelungsbolzen (51) mit dem Sitzteil (2) verbunden oder gekoppelt ist.

11. Kraftfahrzeugsitz nach einem der einem der vorhergehenden Ansprüche, bei dem an dem anderen Ende des jeweiligen Koppelhebels (12) ein Dreh-Schiebegelenk ausgebildet ist, wobei der jeweilige Koppelhebel (12) eine Ausnehmung (15), bevorzugt ein Langloch, aufweist, in welche ein Vorsprung (14), bevorzugt ein Zapfen, des einen Hebels (9) des Mechanismus (4, 9; 80, 81) zum Absenken des Sitzteils (2) in die vorgelagerte Position eingreift, und wobei der Vorsprung (14) an einem hinteren Ende der Ausnehmung (15) anliegt, wenn das Sitzteil (2) beim Vorklappen der Rückenlehne (3) vorgeschwenkt und abgesenkt wird.

12. Kraftfahrzeugsitz nach Anspruch 11, wobei die Ausnehmung (15) so ausgelegt ist, dass zwischen dem Vorsprung (14) und dem hinteren Ende der Ausnehmung (15) ein Spalt bzw. Überhub (24) verbleibt, wenn die Rückenlehne (3) unter dem vorbestimmten Neigungswinkel geneigt und das Sitzteil (2) entriegelt ist.

13. Kraftfahrzeugsitz nach einem der vorhergehenden Ansprüche, bei dem der Mechanismus (4, 9; 80, 81) zum Absenken des Sitzteils (2) in die vorgelagerte Position einen Hebel (9) umfasst, der zwischen dem Verriegelungselement (16) und dem Koppelhebel (12) angeordnet ist.

14. Kraftfahrzeugsitz nach einem der vorhergehenden Ansprüche, bei dem der Mechanismus (4, 9; 80, 81) zum Absenken des Sitzteils (2) in die vorgelagerte Position einen Hebel (9) umfasst, der gemeinsam mit dem Verriegelungselement (16) um eine gemeinsame Achse (11) schwenkbar sind.

15. Kraftfahrzeugsitz nach einem der vorhergehenden Ansprüche, bei dem der Koppelhebel (12) als zweigliedriger Hebel ausgebildet ist, wobei der Mechanismus (4, 9; 80, 81) zum Absenken des Sitzteils (2) in die vorgelagerte Position eine Anschlagnase bzw. einen Mitnehmer (44) aufweist, sodass der Koppelhebel (12) im Anschlag mit der Anschlagnase bzw. dem Mitnehmer (44) beim Vorklappen der Rückenlehne (3) den Mechanismus (4, 9; 80, 81) zum Absenken des Sitzteils (2) in die vorgelagerte Position betätigt.

16. Kraftfahrzeugsitz nach Anspruch 15, bei dem der Mechanismus (4, 9; 80, 81) zum Absenken des Sitzteils (2) in die vorgelagerte Position einen weiteren Mitnehmer (45) zum Zurückführen des Sitzteils (2) aus der vorgelagerten, abgesenkten Position in die Gebrauchslage umfasst.

17. Kraftfahrzeugsitz nach einem der vorhergehenden Ansprüche, bei dem eine lösbare Arretiereinrichtung (31) zum Festlegen des Neigungswinkels der Rückenlehne (3) vorgesehen ist.

18. Kraftfahrzeugsitz nach Anspruch 17, bei dem die lösbare Arretiereinrichtung (31) ausgelegt ist, um eine Mehrzahl unterschiedlicher Neigungswinkel vorzugeben.

19. Kraftfahrzeugsitz nach einem der vorhergehenden Ansprüche, bei dem der Mechanismus (4, 9; 80, 81) zum Absenken des Sitzteils (2) in die vorgelagerte Position als Schwenkhebeleinrichtung mit einem ersten (4) und einem zweiten (9) Schwenkhebel ausgebildet ist.

20. Kraftfahrzeugsitz nach einem der vorhergehenden Ansprüche, bei dem der Mechanismus (4, 9; 80, 81) zum Absenken des Sitzteils (2) in die vorgelagerte Position zumindest eine Führungskulisse (80; 80, 81) umfasst, um das entriegelte Sitzteil (2) beim Vorlagern und Absenken zu führen.

21. Kraftfahrzeugsitz nach einem der vorhergehenden Ansprüche, bei dem die Rückenlehne (3) zur Schaffung einer Ladefläche auf das Sitzteil (2) klappbar ist.

22. Kraftfahrzeugsitz nach einem der vorhergehenden Ansprüche, der als Kraftfahrzeug-Rücksitz ausgebildet ist.

## Claims

1. A motor vehicle seat, comprising a foldable backrest (3) and a lowerable seat part (2),
wherein the backrest (3) can be folded toward the seat part (2) and a mechanism (4, 9; 80, 81) is provided so that the seat part can be lowered from a use position into a forward position, wherein a coupling member (12) is provided in order to couple the folding-down of the backrest (3) to the forward movement and lowering of the seat part (2), and wherein
a locking mechanism (14-16; 50 51, 55) is provided in order to lock the seat part in the use position,
**characterized in that** the coupling member (12) is configured to unlock the locking mechanism (14-16; 50, 51, 55) as the backrest (3) is folded forward toward the seat part (2) when a predefined angle of inclination is reached, so that the inclination of the backrest (3) can be changed while the scat part (2) is locked by folding the backrest (3) forward up to the predefined angle of inclination without unlocking or displacement of the seat part (2) and so that the unlocked seat part (2) can be lowered into the forward position by folding the backrest (3) further forward toward the seat part,
wherein the coupling member comprises at least one coupling lever (12), which respectively actuates a locking element (16; 50, 55) for unlocking the scat part (2), when the backrest (3) has been folded forward toward said predefined angle of inclination.

2. The motor vehicle seat as claimed in claim 1, wherein one end of the coupling lever (12) can pivot about an axle (13) that is spaced apart from a backrest pivot axle (23) and the other end of the coupling lever (12) is articulated to the mechanism (4, 9; 80, 81) for lowering the seat part (2) into the forward position.

3. The motor vehicle seat as claimed in claim 2, wherein the locking element (16) has a locking claw which engages in a locking catch fixed to the bodywork or in a locking bolt fixed to the bodywork or presses down said locking catch or locking bolt.

4. The motor vehicle seat as claimed in any of the preceding claims, wherein the locking element comprises a first locking lever (16, 50) which can pivot about a pivot axle (11; 61) fixed to the bodywork.

5. The motor vehicle seat as claimed in claim 4, wherein the coupling lever (12) respectively has a protrusion or a pin (18) which comes to bear against the associated locking lever (16) when the predefined angle of inclination is reached, in order to pivot said locking lever (16) about the pivot axle (11) fixed to the bodywork when the backrest (3) is folded further forward.

6. The motor vehicle seat as claimed in any of the preceding claims, wherein the locking mechanism comprises a first (50) and a second (55) locking element which cooperate with one another in order to lock the seat part (2) in the use position.

7. The motor vehicle seat as claimed in claim 6, wherein the coupling lever (12) cooperates with the second locking element (55) such that the second locking element (55) releases the first locking element (50) when the backrest (3) is folded further forward from the predefined angle of inclination, in order to release the seat part (2).

8. The motor vehicle seat as claimed in claim 6 or 7, wherein the first and second locking element (50, 55), respectively, is formed as a pivotably mounted lever.

9. The motor vehicle scat as claimed in claim 8, wherein the second lever (55) comprises a shoulder (58) and a bearing surface (25) opposite the shoulder for coupling to the coupling lever (12), wherein the shoulder (58) releases the first lever (50) when the backrest (3) is folded further forward from the predefined angle of inclination.

10. The motor vehicle seat as claimed in any of claims 6 to 9, wherein a locking bolt (51) is connected or coupled to the seat part (2).

11. The motor vehicle seat as claimed in any of the preceding claims, wherein a rotary slide articulation is formed at the other end of the respective coupling lever (12), wherein the respective coupling lever (12) has a recess (15), preferably a longitudinal hole, wherein there engages a protrusion (14), preferably a pin, of one lever (9) of the mechanism (4, 9; 80, 81) for lowering the seat part (2) into the forward position, and wherein the protrusion (14) bears against a rear end of the recess (15) when the seat part (2) is pivoted forward and lowered as the backrest (3) is folded forward.

12. The motor vehicle seat as claimed in claim 11, wherein the recess (15) is configured such that a gap or clearance (24) is left between the protrusion (14) and the rear end of the recess (15) when the backrest (3) is inclined at the predefined angle of inclination and the seat part (2) is unlocked.

13. The motor vehicle seat as claimed in any of the preceding claims, wherein the mechanism (4, 9; 80, 81) for lowering the seat part (2) into the forward position comprises a lever (9) which is disposed between the locking element (16) and the coupling lever (12).

14. The motor vehicle seat as claimed in any of the preceding claims, wherein the mechanism (4, 9; 80, 81) for lowering the seat part (2) into the forward position comprises a lever (9) which can pivot together with the locking element (16) about a common axle (11).

15. The motor vehicle seat as claimed in any of the preceding claims, wherein the coupling lever (12) is formed as a two-part lever, wherein the mechanism (4, 9; 80, 81) for lowering the seat part (2) into the forward position has a stop catch or carrier (44) so that the coupling lever (12) bearing against the stop catch or carrier (44) actuates the mechanism (4, 9; 80, 81) for lowering the seat part (2) into the forward position when the backrest (3) is folded forward.

16. The motor vehicle seat as claimed in claim 15, wherein the mechanism (4, 9; 80, 81) for lowering the seat part (2) into the forward position comprises a further carrier (45) for returning the seat part (2) from the forward, lowered position to the use position.

17. The motor vehicle seat as claimed in any of the preceding claims, wherein a releasable locking device (31) is provided for fixing the angle of inclination of the backrest (3).

18. The motor vehicle seat as claimed in claim 17, wherein the releasable locking device (31) is configured to predefine a plurality of different angles of inclination.

19. The motor vehicle seat as claimed in any of the preceding claims, wherein the mechanism (4, 9; 80, 81) for lowering the seat part (2) into the forward position is formed as a pivot lever device having a first (4) and a second (9) pivot lever.

20. A motor vehicle scat as claimed in any of the preceding claims, wherein the mechanism (4, 9; 80, 81) for lowering the seat part (2) into the forward position comprises at least one guide member (80; 80, 81) for guiding the unlocked seat part (2) as it is moved forward and lowered.

21. The motor vehicle seat as claimed in any of the preceding claims, wherein the backrest (3) can be folded onto the seat part (2) in order to create a loading area.

22. The motor vehicle seat as claimed in any of the preceding claims, which is formed as a motor vehicle rear seat.

## Revendications

1. Siège de véhicule automobile avec un dossier (3) rabattable et une partie de siège (2) abaissable, dans lequel le dossier (3) est rabattable en direction de la partie de siège (2) et un mécanisme (4, 9 ; 80, 81) est prévu de sorte que la partie de siège puisse être abaissée à partir d'une position d'usage dans une position logée en amont, dans lequel
un élément de couplage (12) est prévu afin de coupler le rabattement du dossier (3) au logement en amont et abaissement de la partie de siège (2), et dans lequel
un mécanisme de verrouillage (14-16 ; 50, 51, 55) est prévu afin de verrouiller la partie de siège (2) dans la position d'usage,
**caractérisé en ce que** l'élément de couplage (12) est conçu afin de déverrouiller automatiquement le mécanisme de verrouillage (14-16 ; 50, 51, 55) lors du rabattement en avant du dossier (3) vers la partie de siège (2) lors de l'atteinte d'un angle d'inclinaison prédéterminé de sorte que l'inclinaison du dossier (3) puisse être modifiée lorsque la partie de siège (2) est verrouillée par le rabattement en avant du dossier (3) jusqu'à l'angle d'inclinaison prédéterminé sans que la partie de siège (2) ne soit déverrouillée ou réglée et la partie de siège (2) déverrouillée soit abaissable par un autre rabattement en avant du dossier (3) en direction de la partie de siège (2) dans la position logée en amont,
dans lequel l'élément de couplage comporte au moins un levier d'accouplement (12) qui actionne respectivement un élément de verrouillage (16 ; 50, 55) afin de déverrouiller la partie de siège (2) si le dossier (3) est rabattu en avant jusqu'à l'angle d'inclinaison prédéterminé.

2. Siège de véhicule automobile selon la revendication 1, dans lequel une extrémité du levier d'accouplement (12) peut être pivotée autour d'un axe (13) qui est espacé d'un axe de pivotement de dossier (23) et l'autre extrémité du levier d'accouplement (12) est articulée au mécanisme (4, 9 ; 80, 81) pour l'abaissement de la partie de siège (2) dans la position logée en amont.

3. Siège de véhicule automobile selon la revendication 2, dans lequel l'élément de verrouillage (16) présente une griffe de verrouillage qui s'engage dans un nez de verrouillage fixé à la carrosserie ou un boulon de verrouillage fixé à la carrosserie ou l'enfonce.

4. Siège de véhicule automobile selon l'une quelconque des revendications précédentes, dans lequel l'élément de verrouillage comporte un premier levier de verrouillage (16 ; 50) qui peut être pivoté autour d'un axe de pivotement (11 ; 61) fixé à la carrosserie.

5. Siège de véhicule automobile selon la revendication 4, dans lequel le levier d'accouplement (12) présente respectivement une saillie ou un tenon (18) qui parvient lors de l'atteinte de l'angle d'inclinaison prédéterminé en appui contre le levier de verrouillage (16) associé afin de pivoter celui-ci lors d'un autre rabattement en avant (3) autour de l'axe de pivotement (11) fixé à la carrosserie.

6. Siège de véhicule automobile selon l'une quelconque des revendications précédentes, dans lequel le mécanisme de verrouillage comporte un premier (50) et un second (55) éléments de verrouillage qui coopèrent ensemble afin de verrouiller la partie de siège (2) dans la position d'usage.

7. Siège de véhicule automobile selon la revendication 6, dans lequel le levier d'accouplement (12) coopère avec le second élément de verrouillage (55) de sorte que le second élément de verrouillage (55) libère lors d'un autre rabattement en avant du dossier (3) de l'angle d'inclinaison prédéterminé le premier élément de verrouillage (50) afin de libérer la partie de siège (2).

8. Siège de véhicule automobile selon la revendication 6 ou 7, dans lequel le premier et le second éléments de verrouillage (50, 55) sont réalisés respectivement comme des leviers logés à pivotement.

9. Siège de véhicule automobile selon la revendication 8, dans lequel le second levier (55) présente un épaulement (58) et une surface d'appui (25) opposée à l'épaulement pour un accouplement avec le levier d'accouplement (12), l'épaulement (58) libérant le premier levier (50) lors d'un autre rabattement en avant du dossier (3) de l'angle d'inclinaison prédéterminé.

10. Siège de véhicule automobile selon l'une quelconque des revendications 6 à 9, dans lequel un boulon de verrouillage (51) est relié ou couplé à la partie de siège (2).

11. Siège de véhicule automobile selon l'une quelconque des revendications précédentes, dans lequel sur l'autre extrémité du levier d'accouplement (12) respectif est réalisée une articulation coulissante et tournante, dans lequel le levier d'accouplement (12) respectif présente un évidement (15), de préférence un trou oblong, dans lequel une saillie (14), de préférence un tenon d'un levier (9) du mécanisme (4, 9 ; 80, 81) s'engage pour l'abaissement de la partie de siège (2) dans la position logée en amont, et dans lequel la saillie (14) repose sur une extrémité arrière de l'évidement (15) si la partie de siège (2) est prépivotée et abaissée lors du rabattement en avant du dossier (3).

12. Siège de véhicule automobile selon la revendication 11, dans lequel l'évidement (15) est conçu de sorte qu'entre la saillie (14) et l'extrémité arrière de l'évidement (15) reste une fente ou un dépassement de course (24) si le dossier (3) est incliné sous l'angle d'inclinaison prédéterminé et la partie de siège (2) est déverrouillée.

13. Siège de véhicule automobile selon l'une quelconque des revendications précédentes, dans lequel le mécanisme (4, 9 ; 80, 81) comporte pour l'abaissement de la partie de siège (2) dans la position logée en amont un levier (9) qui est disposé entre l'élément de verrouillage (16) et le levier d'accouplement (12).

14. Siège de véhicule automobile selon l'une quelconque des revendications précédentes, dans lequel le mécanisme (4, 9 ; 80, 81) comporte pour l'abaissement de la partie de siège (2) dans la position logée en amont un levier (9) qui peut être pivoté conjointement avec l'élément de verrouillage (16) autour d'un axe commun (11).

15. Siège de véhicule automobile selon l'une quelconque des revendications précédentes, dans lequel le levier d'accouplement (12) est réalisé comme un levier à deux membres, dans lequel le mécanisme (4, 9 ; 80, 81) présente pour l'abaissement de la partie de siège (2) dans la position logée en amont un nez de butée ou un entraîneur (44) de sorte que le levier d'accouplement (12) actionne en butée avec le nez de butée ou l'entraîneur (44) lors du rabattement en avant du dossier (3) le mécanisme (4, 9 ; 80, 81) pour l'abaissement de la partie de siège (2) dans la position logée en amont.

16. Siège de véhicule automobile selon la revendication 15, dans lequel le mécanisme (4, 9 ; 80, 81) comporte pour l'abaissement de la partie de siège (2) dans la position logée en amont un autre entraîneur (45) pour ramener la partie de siège (2) d'une position abaissée, logée en amont à la position d'usage.

17. Siège de véhicule automobile selon l'une quelconque des revendications précédentes, dans lequel un dispositif d'arrêt (31) amovible est prévu pour la fixation de l'angle d'inclinaison du dossier (3).

18. Siège de véhicule automobile selon la revendication 17, dans lequel le dispositif d'arrêt (31) amovible est conçu afin de prescrire une pluralité d'angles d'inclinaison différents.

19. Siège de véhicule automobile selon l'une quelconque des revendications précédentes, dans lequel le mécanisme (4, 9 ; 80, 81) est réalisé pour l'abaissement de la partie de siège (2) dans la position logée en amont comme dispositif de levier pivotant avec un premier (4) et un second (9) leviers pivotants.

20. Siège de véhicule automobile selon l'une quelconque des revendications précédentes, dans lequel le mécanisme (4, 9 ; 80, 81) comporte pour l'abaissement de la partie de siège (2) dans la position logée en amont au moins une coulisse de guidage (80 ; 80, 81) afin de guider la partie de siège (2) déverrouillée lors du logement en amont et abaissement.

21. Siège de véhicule automobile selon l'une quelconque des revendications précédentes, dans lequel le dossier (3) est rabattable pour créer une surface de chargement sur la partie de siège (2).

22. Siège de véhicule automobile selon l'une quelconque des revendications précédentes, qui est réalisé comme un siège arrière de véhicule automobile.
